# DEMANDE DE BREVET EUROPEEN

(11) **EP 3 677 472 A1**
(43) Date de publication de la demande: **08.07.2020**
(21) Numéro de dépôt: 19216637.9
(22) Date de dépôt: 16.12.2019
(51) Int. Cl.: B60Q 1/26, F21S 43/237, F21S 43/27, F21V 8/00, G02B 6/08, B60R 13/02, F21S 45/10

(54) **PROCÉDÉ DE MONTAGE D'UN TISSU ÉCLAIRANT SUR UN SUPPORT DE RÉCEPTION DU TISSU ÉCLAIRANT**

(30) Priorité: 21.12.2018 FR 1873956
(71) Demandeur: Compagnie Plastic Omnium, 69007 Lyon (FR)
(72) Inventeur: STABLO, Frédéric, 01150 Sainte-Julie (FR)
(74) Mandataire: LLR

(57) **Abrégé**

L'invention a pour objet un procédé de montage d'un tissu éclairant (20) sur un support de réception (30) d'un ensemble (10) pour pièce extérieure de véhicule automobile, le tissu éclairant (20) comportant une zone éclairante (22) et des zones de bordure non éclairantes (24), comprenant les étapes de
a) Serrage des extrémités des zones de bordure (26) du tissu éclairant (20) dans des outils de préhension (50),
b) Mise en tension du tissu éclairant (20) par action des outils (50) et mise en place du tissu éclairant (20) sur le support (30), la zone éclairante (22) du tissu (20) étant tendue sans jeu sur le support (30),
c) Création des zones de liaison non mécanique et sensiblement continues (40) entre le tissu éclairant (20) et le support de réception (30) dans les zones de bordure non éclairantes (24) du tissu éclairant (20) et de bordure du support de réception (30),
d) Éventuellement, découpe des extrémités des zones de bordure (26).

## Description

La présente invention concerne le domaine de l'industrie automobile, et notamment le domaine des pièces de véhicule automobile comportant un dispositif éclairant. Plus précisément, l'invention concerne un procédé de montage d'un tissu éclairant sur un support du tissu éclairant pour réaliser un ensemble destiné à répondre à une fonction d'éclairage, en particulier dans un véhicule.

Des pièces extérieures comportant un dispositif d'éclairage sont prévues sur un véhicule automobile, soit pour améliorer la sécurité comme imposé par des lois ou règlements, soit pour contribuer à l'aspect général extérieur du véhicule. Voici quelques exemples non limitatifs : les feux de croisement, de position, d'arrêt, de recul, de côté, de dépassement, de détresse, d'éclairage de plaque de police, les feux antibrouillards, les clignotants, les phares, les baguettes chromées courant le long de la partie latérale du véhicule, les protections de bas de caisse, le logo d'une marque, les enjoliveurs de poignées de porte, les coques de rétroviseurs.

On connaît déjà des ensembles d'un tissu éclairant et d'un support du tissu éclairant pour pièces de véhicules automobiles, comme décrit par exemple dans les documents WO2017/115035A1 et US5 568 964A . Dans de tels ensembles, le tissu éclairant est généralement fixé sur le support par collage sur au moins une partie de la surface de la zone éclairante du tissu. Cette solution n'est pas satisfaisante car la colle migre dans le tissu et provoque son jaunissement ou son opacification, voire entraîne une perte de son efficacité lumineuse au fil du temps et risque aussi d'aboutir à un décollement du tissu de son support. Une autre solution connue pour fixer le tissu éclairant sur son support est de clipper le tissu, mais compte tenu du nombre de clips nécessaires pour assurer une fixation correcte du tissu sur le support le temps de montage est très long, notamment pour des zones lumineuses de grandes longueurs. De plus, cette solution n'est pas toujours satisfaisante en terme de tension du tissu sur le support.

L'invention a notamment pour but de fournir un procédé de fabrication, rapide et simple d'un ensemble comprenant un tissu éclairant et un support du tissu éclairant durable dans le temps.

A cet effet, l'invention a notamment pour objet un procédé de montage d'un tissu éclairant sur un support de réception d'un ensemble pour pièce extérieure de véhicule automobile, le tissu éclairant comportant une zone éclairante et des zones de bordure non éclairantes, comprenant les étapes de
a) Serrage des extrémités des zones de bordure du tissu éclairant dans des outils de préhension ,
b) Mise en tension du tissu éclairant par action des outils et mise en place du tissu éclairant sur le support, la zone éclairante du tissu étant tendue sans jeu sur le support,
c) Création des zones de liaison non mécanique et sensiblement continues entre le tissu éclairant et le support de réception dans les zones de bordure non éclairantes du tissu éclairant et de bordure du support de réception,
d) Éventuellement, découpe des extrémités des zones de bordure..

On entend ici par liaison non mécanique une liaison dans laquelle aucun moyen mécanique supplémentaire tel que des crochets, des agrafes ou des rivets n'est employé. Ainsi, une liaison non mécanique dans le cadre de la présente invention peut être, de manière non limitative, un soudage, un collage

Ainsi, on propose un procédé de fabrication d'un ensemble pour une pièce automobile comprenant un tissu éclairant fixé sur un support par un moyen non mécanique, les zones de liaison entre le tissu éclairant et le support se situant dans les zone de bordure du tissu éclairant qui sont non éclairantes, ce qui présente l'avantage d'éviter tous les problèmes liés au vieillissement de la colle dans les zones éclairantes du tissu avec le temps, et de faciliter la fabrication de la pièce automobile comprenant cet ensemble.

Le procédé de montage peut en outre comporter l'une ou plusieurs des caractéristiques suivantes, prises seules ou en combinaison.

Le procédé comprend une étape préalable de création de zone d'extrémité épaisses dans les zones de bordure non éclairantes du tissu éclairant. Ces zones d'extrémité épaisses permettent une meilleure préhension de l'extrémité de la zone de bordure par l'outil.

Les zones de liaison non mécaniques entre le tissu éclairant et le support de réception sont des zones de collage ou de soudage par ultrasons. Ce moyen de liaison permet une fixation rapide et solide du tissu éclairant sur le support de réception. La fixation par ce moyen de liaison est permanente, ce qui implique que le support de réception et le tissu ne peuvent pas être séparés de manière non intentionnelle.

Le support de réception possède une zone de réception du tissu éclairant sensiblement plane. Ceci améliore encore la facilité de fabrication de l'ensemble, du fait qu'il est aisé d'obtenir une tension sans jeu d'un tissu sur une zone de réception plane.

Le support possède une zone de réception du tissu éclairant galbée. Le fait de disposer de zones de liaison sensiblement continues entre les bordures non éclairantes du tissu éclairant et les bordures du support de réception du tissu permet de fixer le tissu éclairant sans jeu et en tension sur un support de réception galbé ou courbé, y compris de forme complexe.

Le support de réception est réalisé en matériau polymère thermoplastique, et de préférence en polypropylène. Les polymères thermoplastiques, notamment le polypropylène, possèdent des propriétés mécaniques et chimiques, qui les rendent particulièrement aptes à être utilisés en tant que support de réception d'un tissu éclairant. Le polypropylène est en outre très fréquemment utilisé pour la fabrication des pièces extérieures de véhicule automobile.

Le tissu éclairant comporte des fibres optiques tissées avec des fibres textiles usuelles, telles que du polyester, du polyamide, du polyéthylène.

Le procédé comprend en outre une étape de mise en place d'une protection transparente, translucide ou semi-opaque placée sur le tissu éclairant, à l'opposé du support de réception. La présence d'une protection transparente, translucide ou semi-opaque sur le tissu éclairant permet de le protéger contre les détériorations. Les tissus éclairants sont généralement fragiles, et en l'absence de protection leur durée de vie est réduite..

### Brève description des figures

L'invention sera mieux comprise à la lecture de la description qui va suivre donnée uniquement à titre d'exemple et faite en se référant aux dessins annexés dans lesquels :
[Fig. 1] est une vue de dessus en perspective illustrant l'ensemble pour pièce de véhicule automobile comprenant un tissu éclairant et un support de réception du tissu éclairant.
[Fig. 2] est une vue partielle de l'ensemble de la figure 1 montrant plus particulièrement une zone de liaison entre le tissu éclairant et le support de réception.
[Fig. 3] est un ensemble de vues latérales à différentes étapes du procédé (figures 3a à 3d).
[Fig. 4] est un ensemble de vues latérales (figures 4a et 4b) illustrant différentes étapes de fabrication des zones d'extrémité épaisses dans les bordures non éclairantes du tissu éclairant.
[Fig. 5] est une vue latérale illustrant une zone d'extrémité épaisse du tissu éclairant selon un mode de réalisation différent de celui des figures 4a et 4b.
[Fig. 6] est une vue de l'ensemble dans lequel le tissu éclairant de la figure 5 est en position sur le support et ses extrémités sont maintenues dans des outils de préhension respectifs.

### Description détaillée

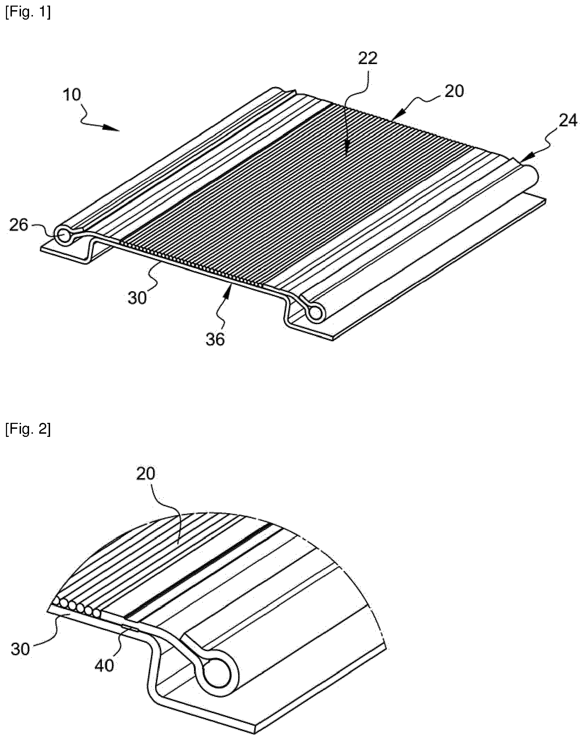

Comme illustré sur les figures 1 et 2, l'ensemble pour pièce de véhicule automobile 10 comprend un tissu éclairant 20 et un support de réception 30 du tissu éclairant 20 fixé tendu et sans jeu sur le support de réception 30 par des zones de liaison 40 non mécaniques et sensiblement continues, placées dans les zones de bordure non éclairantes 24 du tissu éclairant 20, et sur les bordures du support de réception 30.

La fonction d'éclairage du tissu éclairant 20 peut être réalisée par des fibres optiques. En général, les fibres optiques sont tissées avec des fibres textiles usuelles, les fibres optiques appartenant alors soit aux fils de chaîne ; soit aux fils de trame, ou éventuellement aux deux. Le tissu éclairant, ou tissu électroluminescent, est ainsi uniformément éclairé. Les fibres optiques individuelles peuvent être rassemblées en un faisceau à une extrémité du tissu éclairant 20 et alimentées par une source de lumière. La lumière qui traverse les fibres est émise sur toute la longueur de celles-ci à travers de petits orifices, ou fentes, qui percent le revêtement extérieur.

Il est entendu que tout autre type de tissu éclairant peut être utilisé en tant que tissu éclairant 20 de l'ensemble 10, par exemple un tissu éclairant dont la fonction d'éclairage est fournie par des diodes électroluminescentes.

Le tissu éclairant 20 comporte une zone éclairante 22. Le tissu éclairant 20 est pourvu de zones de bordure 24 non éclairantes, que l'on dénomme aussi « zones techniques ». Ces zones de bordure 24 peuvent comprendre des renforts pour augmenter la résistance mécanique du tissu éclairant 20. Le tissu éclairant 20 comprend ces zones de bordure 24 sur au moins deux de ses bordures opposées. Dans le mode de réalisation des figures 1 et 2, les zones de bordures 24 du tissu éclairant comprennent à leurs extrémités des zones de surépaisseur 26 plus épaisses que le reste de la zone de bordure 24.

Les zones de surépaisseur 26 peuvent être obtenues en fixant un câble, une cordelette, une baguette ou tout autre élément de forme allongée et avec une section facilitant la préhension, donc avec une épaisseur suffisante le long de la zone de bordure non éclairante 24, par exemple en repliant une extrémité de la bordure pour enfermer l'élément 70. Les zones de surépaisseur peuvent également être obtenues en repliant la bordure sur elle-même.

Dans le mode de réalisation représenté sur les figures 1 et 2, le support de réception 30 comprend une zone 36 de réception du tissu éclairant. Dans le mode de réalisation des figures 1 et 2, cette zone de réception 36 est sensiblement plane, ce qui permet une installation particulièrement aisée du tissu éclairant 20 sur le support de réception 30.

Toutefois, l'ensemble 10 pour pièce automobile peut également comporter un support de réception 30 dont la zone de réception est de forme galbée, ou courbée, de forme complexe.

Le support de réception 30 est généralement fabriqué en matériaux polymères thermoplastiques. Le polypropylène convient particulièrement bien, mais tout autre type de polymère thermoplastique ou de mélange de polymères thermoplastiques apte à être lié par une liaison non mécanique au tissu éclairant 20 peut être utilisé.

L'ensemble 10 pour pièce automobile est bien adapté au montage dans des éléments de carrosserie automobile extérieurs. Plus particulièrement, du fait de la rapidité et de la facilité de montage du tissu éclairant 20 sur le support de réception 30, l'ensemble 10 est très bien adapté pour des pièces de carrosserie allongées et de grande dimension, telles que des pare-chocs. L'ensemble 10 peut également être utilisé, de manière non limitative, dans les feux de croisement, de position, d'arrêt, de recul, de côté, de dépassement, de détresse, d'éclairage de plaque de police, les feux antibrouillards, les clignotants, les phares, les baguettes chromées courant le long de la partie latérale du véhicule, les protections de bas de caisse, le logo d'une marque, les enjoliveurs de poignées de porte, les coques de rétroviseurs. Par extension, toutes les pièces de la carrosserie visibles de l'extérieur avec une fonction d'éclairage peuvent entrer dans le champ d'application de l'invention.

Avantageusement, l'ensemble 10 comprend en outre une protection transparente, translucide ou semi-opaque placée sur le tissu éclairant 20, à l'opposé du support de réception 30. Cette protection permet d'augmenter sensiblement la durée de vie du tissu éclairant 30 en le protégeant contre les agressions extérieures. La protection prend généralement la forme d'une plaque ou d'un panneau, en matériau polymère, ou d'un film.

Nous allons maintenant décrire le procédé de montage de l'ensemble 10 pour pièce automobile.

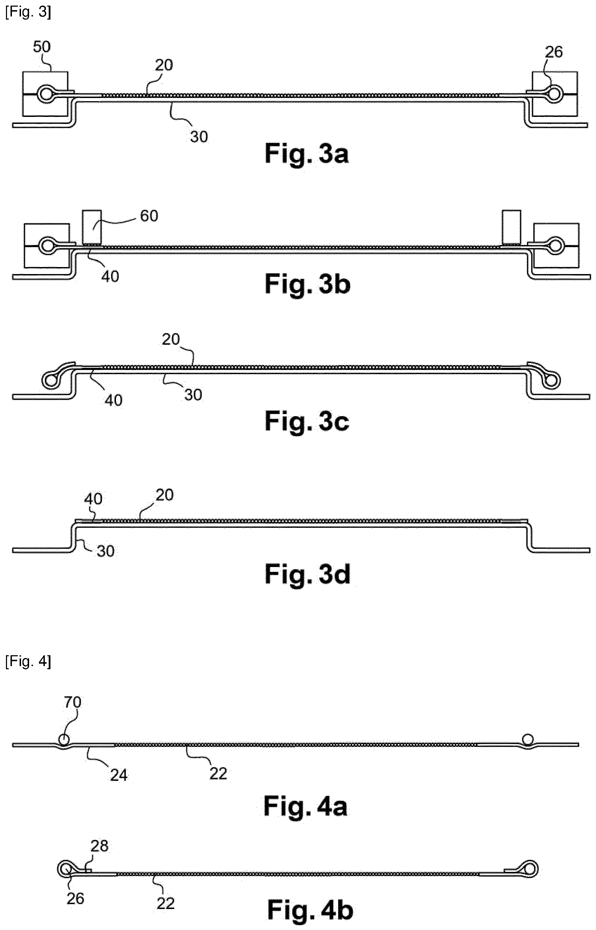

Dans une première étape, on apporte le tissu éclairant 20 pourvu de zones de bordure 24 ayant des zones d'extrémité épaisses 26, et les zones d'extrémité épaisses 26 sont serrées dans des outils respectifs 50, puis dans une seconde étape le tissu est tendu à l'aide des outils 50 et placé en contact sans jeu sur le support de réception 30, ainsi que cela est représenté à la figure 3a.

Dans une seconde étape, représentée à la figure 3b, on procède à la création des zones de liaison 40 entre le tissu 20 et le support 30, et plus précisément entre les zones de bordure non éclairantes 24 du tissu éclairant 20, et les bordure du support de réception 30. Sur la figure 3b, la création des zones de liaison 40 se fait par soudage aux ultrasons d'une partie des zones de bordure 24 du tissu éclairant 20 et des bordures du support de réception 30 par un outil approprié 60, tel qu'un « Sonotrode ».

On entend par « sonotrode » un dispositif de préférence de forme allongée, par exemple en forme de tige, ou cylindrique, relié à un générateur d'ultrasons. Cette sonotrode reçoit des ultrasons provenant du générateur d'ultrasons, à une fréquence généralement comprise entre 20kHz et 40 kHz, et restitue l'énergie vibratoire dans son extrémité en contact avec les matériaux à souder.

Ce mode de fixation permet de créer facilement et rapidement des zones de liaison 40 continues ou sensiblement continues entre les bordures 24 du tissu éclairant 20 et les bordures du support de réception 30. Ainsi, les zones de liaison 40 ont généralement la forme d'une bande.

Lors d'un soudage aux ultrasons du tissu éclairant 20 et du support 30, la liaison se fait à la fois grâce à un effet mécanique et un effet chimique. L'effet mécanique est dû à un blocage du mouvement du tissu éclairant 20 par rapport au support 30, du fait que de la matière du support qui fond sous l'effet du chauffage se trouve « piégée » dans le tissu, et refroidit et se solidifie lorsque la sonotrode est arrêtée. En outre, le plus souvent, une liaison chimique se crée entre la surface du tissu éclairant 20 et la matière du support 30 qui a fondu.

L'invention n'est toutefois pas limitée à ce mode de fixation. Tout mode de réalisation permettant la création de zones de liaisons non mécaniques entre le tissu éclairant 20 et le support de fixation 30 peut convenir. Le soudage peut être réalisé par des moyens autres que des ultra-sons, par exemple par des impulsions électriques, et une liaison par collage entre le tissu éclairant 20 et le support 30 peut également être envisagée.

Dans une troisième étape, représentée à la figure 3c, on libère les zones d'extrémité épaisses 26 de l'outil de préhension 50. Le tissu éclairant 20 est ainsi à présent fixé sur le support de réception 30.

Dans une quatrième étape, optionnelle, représentée à la figure 3d, les zones d'extrémité plus épaisses 26 sont découpées.

Dans une étape préalable à la première étape, cette étape préalable étant également optionnelle, représentée aux figures 4a et 4b, les zones d'extrémité épaisses 26 des bordures du tissu éclairant 20 sont préparées, en apportant un élément 70, tel qu'une cordelette, une tige métallique, ou tout autre objet de forme allongée, à proximité de l'extrémité de la zone de bordure du tissu et en repliant la zone de bordure sur l'élément 70 de manière à créer une zone d'extrémité de bordure épaisse 26.

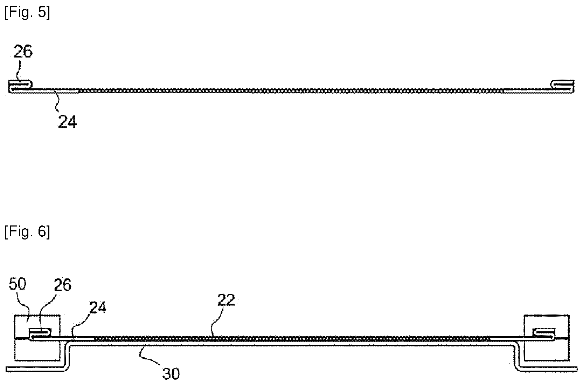

Les figures 5 et 6 représentent un autre mode de réalisation de l'extrémité épaisse 26 dans la zone de bordure 24, dans lequel la zone de bordure non éclairante 24 du tissu éclairant 20 est repliée sur elle-même, pour former une épaisseur. Sur la figure 5b, les zones d'extrémité épaisses 26 sont serrées dans les outils respectifs 50.

L'invention n'est pas limitée aux modes de réalisation présentés et d'autres modes de réalisation apparaîtront clairement à l'homme du métier. Notamment, la forme générale du support de réception 30 pourra être différente de ce qui est représenté sur les figures, en particulier cette forme n'est pas limitée à un rectangle.

## Revendications

1. Procédé de montage d'un tissu éclairant (20) sur un support de réception (30) d'un ensemble (10) pour pièce extérieure de véhicule automobile, le tissu éclairant (20) comportant une zone éclairante (22) et des zones de bordure non éclairantes (24), comprenant les étapes de
a) Serrage des extrémités des zones de bordure (26) du tissu éclairant (20) dans des outils de préhension (50),
b) Mise en tension du tissu éclairant (20) par action des outils (50) et mise en place du tissu éclairant (20) sur le support (30), la zone éclairante (22) du tissu (20) étant tendue sans jeu sur le support (30),
c) Création des zones de liaison non mécanique et sensiblement continues (40) entre le tissu éclairant (20) et le support de réception (30) dans les zones de bordure non éclairantes (24) du tissu éclairant (20) et de bordure du support de réception (30),
d) Éventuellement, découpe des extrémités des zones de bordure (26).

2. Procédé de montage d'un ensemble (10) selon la revendication précédente comprenant une étape préalable de création de zone d'extrémité épaisses (26) dans les zones de bordure non éclairantes (24) du tissu éclairant (20).

3. Procédé de montage d'un ensemble (10) selon l'une quelconque des revendications précédentes, dans lequel les zone de liaison non mécaniques (40) entre le tissu éclairant (20) et le support de réception (30) sont des zones de collage ou de soudage, par exemple par ultrasons.

4. Procédé de montage d'un ensemble (10) selon l'une quelconque des revendications précédentes, dans lequel le support (30) possède une zone de réception (36) du tissu éclairant (20) sensiblement plane.

5. Procédé de montage d'un ensemble (10) selon l'une quelconque des revendications 1 à 3, dans lequel le support (30) possède une zone de réception (36) du tissu éclairant (20) galbée.

6. Procédé de montage d'un ensemble (10) selon l'une quelconque des revendications précédentes, dans lequel le support de réception (30) est réalisé en matériau polymère thermoplastique, et de préférence en polypropylène.

7. Procédé de montage d'un ensemble (10) selon l'une quelconque des revendications précédentes, dans lequel le tissu éclairant (20) comporte des fibres optiques tissées avec des fibres textiles usuelles, et de préférence du polyéthylène.

8. Procédé de montage d'un ensemble (10) selon l'une quelconque des revendications précédentes, comportant en outre une étape de mise en place d'une protection transparente, translucide ou semi-opaque sur le tissu éclairant (20), à l'opposé du support de réception (30).
